# EUROPÄISCHE PATENTANMELDUNG

(11) **EP 0 913 626 A1**
(43) Veröffentlichungstag der Anmeldung: **06.05.1999**
(21) Anmeldenummer: 98112376.3
(22) Anmeldetag: 04.07.1998
(51) Int. Cl.: F21V 8/00

(54) **Lichtleitplatte**

(30) Priorität: 31.10.1997 DE 19748166
(71) Anmelder: Preh-Werke GmbH & Co. KG, 97616 Bad Neustadt (DE)
(72) Erfinder: Berthold, Gottfried, Dr., 72766 Reutlingen (DE)
(74) Vertreter: Pfeiffer, Helmut, Dipl.-Ing.

(57) **Zusammenfassung**

Die Erfindung betrifft eine Lichtleitplatte, bestehend aus Glas oder Kunststoff und mit aufgesetzten Symbolen, zur Verteilung von Lichtstrahlen.

Bei bekannten Lichtleitplatten (1) werden die Lichtstrahlen (10) durch Totalreflexion in der Lichtleitplatte (1) geführt. An den Stellen, wo sich die Symbole (9) befinden, wird diese Totalreflexion aufgehoben, so daß die Symbole (9) beleuchtet werden. Die Totalreflexion wird jedoch auch durch Staub- und Schmutzpartikel gestört, die somit beleuchtet werden, was unerwünscht ist.

Hiergegen wird durch Aufbringung einer zusätzlichen, transparenten Deckschicht (3, 5) auf die Lichtleitplattenoberfläche (2, 4) eine zusätzliche Grenzfläche (6) geschaffen, an der die Totalreflexion der Lichtstrahlen (10) erfolgt, so daß diese nicht bis zur anderen Grenzschicht zwischen der Deckschicht (3, 5) und der Luft gelangen. Diese Deckschicht (3, 5) weist einen kleineren Brechungsindex n als die Lichtleitplatte (1) auf, jedoch einen größeren als die umgebende Luft.

## Beschreibung

Die Erfindung betrifft eine Lichtleitplatte nach dem Oberbegriff des Patentanspruchs 1.

Lichtleitplatten werden vielfach angewandt, um Symbole oder Hinweise in Kaufhäusern, Bahnhöfen, Flugplatzgebäuden usw. von für den Betrachter nahezu unsichtbaren Lichtquellen zu beleuchten. Lichtleitplatten finden auch in Kfz-Armaturen und Kfz-Instrumenten Anwendung. Dabei wird eine Lichtquelle in eine einseitig längs einer Lichtleitplattenkante verlaufende Halterung untergebracht, so daß das Licht senkrecht von einer Begrenzungskante in die Lichtleitplatte eintritt und parallel zu dieser Oberfläche durch Totalreflexion bestimmt geführt wird. Ein Lichtaustritt aus der Lichtleitplatte erfolgt nur dort, wo die Lichtstrahlen unter steilerem Winkel als dem Grenzwinkel der Totalreflexion auf die Oberflächen der Lichtleitplatte treffen, was in der Regel nur an der dem Lichteintritt gegenüberliegenden Schnittkante der Lichtleitplatte gegeben ist, soweit ihre Oberfläche annähernd senkrecht zur Strahlausbreitungsrichtung liegt. Die diskrete Beleuchtung der auf der Lichtleitplattenoberfläche aufgebrachten Symbole oder Hinweise erfolgt durch Störung der Totalreflexion an der Lichtleitplattenoberfläche durch streuende Beschichtungen, die zum Beispiel als teilweise transparente Streukörper enthaltende Lacksctuchten auf die Lichtleitplattenoberfläche aufgebracht werden. Hierdurch werden entsprechend aufgedruckte Symbole oder Schriftzeichen leuchtend sichtbar, da an diesen Stellen die Totalreflexionsbedingung gestört wird.

Nachteilig wirkt sich im Gegensatz zur erwünschten Aufhellung von Schriftzeichen das durch gleichen Mechanismus ausgelöste Sichtbarwerden von Staub- bzw. Schmutzpartikeln aller Art auf der Oberfläche der Lichtleitplatte aus.

Aufgabe der Erfindung ist es, die Lichtleitplatte so zu gestalten, daß ungewollte Störungen der Totalreflexion an der Lichtleitplattenoberfläche vermieden werden.

Die Aufgabe wird durch die im Patentanspruch 1 enthaltenen Merkmale gelöst.

Durch das Aufbringen einer zusätzlichen transparenten Deckschicht auf die Lichtleitplattenoberfläche wird eine weitere Grenzfläche vor der ursprünglich liegenden Grenzfläche zur Luft geschaffen. Dadurch erfolgt die Totalreflexion bereits an dieser neuen Grenzfläche und alle Partikel auf der nun durch die Deckschicht gebildeten Oberfläche erscheinen nicht mehr erleuchtet. Die transparente Deckschicht besitzt einen kleineren Brechungsindex als das Lichtleitplattenmaterials, er ist jedoch größer als der Brechungsindex des umgebenden Luftraumes, damit bereits eine Totalreflexion an der Grenzfläche zwischen Lichtleitplatte und Deckschicht erfolgen kann.

Vorteilhafte Ausführungen sind in den Unteransprüchen enthalten.

Die gewünschten Symbole können auf der zum Beispiel nicht mit Deckschicht versehenen Rückseite der Lichtleitplatte untergebracht werden oder in entsprechende Aussparungen der Deckschicht auf der Vorderseite. Es ist auch möglich, die Symbole vor Aufbringung der Deckschicht aufzubringen und die Deckschicht nachträglich ganzflächig über die Symbole und die freien Bereiche der Lichtleitplatte aufzutragen, wobei sowohl Vorder- wie auch Rückseite der Lichtleitplatte beschichtet oder auch beide Seiten so bedeckt werden können. Die Symbole können dabei ein- oder auch verschiedenfarbig sein. Die Einstellung der für die Anwendung erforderlichen Brechungsindizes gelingt durch geeignete Dotierung der aufgebrachten Schichten oder der Beschichtungsmittel, die üblicherweise durch Einbringen sehr feiner Metalloxydpartikel mit Durchmessern im Bereich von 0,1 bis 1 nm erreicht wird. Die Beschichtungen selbst können beispielsweise durch Aufdampfen, Kathodenzerstäubung oder Siebdruck mit nachfolgendem Aushärteprozeß aufgebracht werden. Es ist aber auch möglich, solche Schichten aus der flüssigen Phase abzuscheiden und durch Hydrolyse umzuformen und bei nachfolgendem Tempern auszuhärten.

Die Erfindung soll anhand eines Ausführungsbeispiels mit Zeichnung näher erläutert werden.

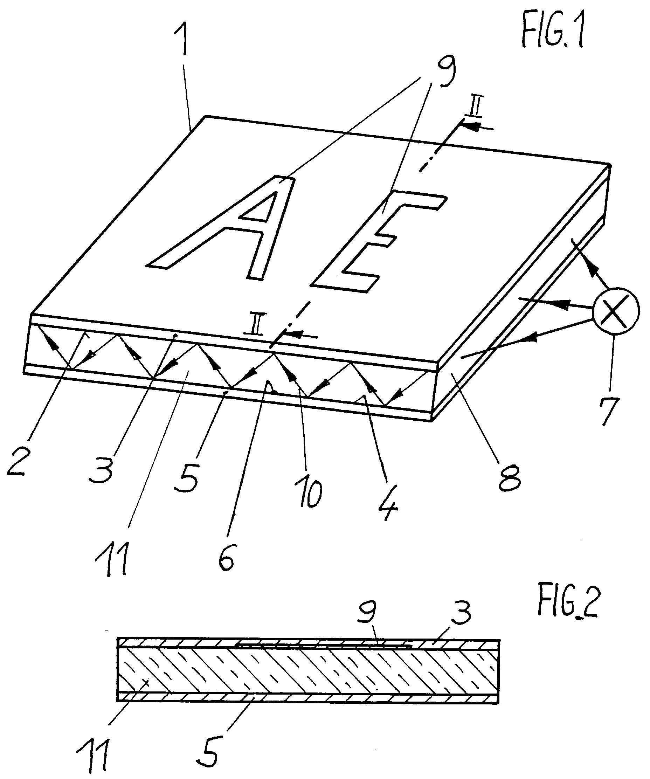

Es zeigt:
Figur 1
   eine perspektivische Schnittdarstellung einer Lichtleitplatte,
Fig. 2
   eine Schnittdarstellung II-II aus Fig. 1.

Eine in Fig. 1 mit 1 gekennzeichnete transparente Lichtleitplatte weist an ihrer Oberfläche 2 eine transparente obere Deckschicht 3 auf und an ihrer unteren Oberfläche 4 eine transparente untere Deckschicht 5, wodurch Grenzschichten bzw. Grenzflächen 6 gebildet werden. Eine Lichtquelle 7, beispielsweise eine LED, liegt an einer Einkoppelfläche 8 der Lichtleitplatte 1 an. Beleuchtete Symbole 9 befinden sich auf der Lichtleitplattenoberfläche 4 beispielsweise unter der oberen Deckschicht 3 (Fig. 2). Bei Einbehaltung der Funktionsbedingung, daß der Brechungsindex n₂ der Deckschichten 3, 5 kleiner als der Brechungsindex n₁ der Lichtleitplatte 1 ist, kann dieser Brechungsindex n₂ der oberen und unteren Deckschichten 3, 5 zwischen 1,0 und 1,9 gewählt werden. Dieser Bereich ergibt sich aus den bekannten Berechnungsindizes von Luft n_{L} = 1,0 und der Lichtleitplatte 1 n₁ = 1,4 bis 1,9, wobei das Lichtleitplattenmaterial 11 ein Glas oder Kunststoff ist. Die Einstellung der für die Anwendung erforderlichen Brechungsindizes ist durch geeignete Dotierung der aufgebrachten Schichten 3, 5 oder der Beschichtungsmittel möglich.

Wird durch die Lichtquelle 7 das Licht 10 strahlenförmig in die Einkoppelfläche 8 eingeleitet, so erfolgt an der oberen und unteren Deckschicht 3, 5 die Totalreflexion, wodurch die Lichtstrahlen 10 kontinuierlich in der Lichtleitplatte 1 weitergeleitet werden. Diese Totalreflexion findet dadurch statt, daß die Lichtstrahlen 10 vom optisch dichteren Medium Lichtleitplattenmaterial 11 kommend, auf die Grenzflächen 6 des optisch dünneren Mediums Deckschicht 3, 5 treffen. An den Stellen, an denen sich die Symbole 9 befinden, wird die Totalreflexion durch die bereits erwähnten Streukörper in oder an den Symbolen 9 aufgehoben.

Die Beschichtung der Lichtleitplattenoberflächen 2, 4 mit den transparenten Deckschichten 3, 5 erfolgt durch Aufdampfen des Deckschichtmaterials, kann aber auch durch Kathodenzerstäubung oder bekanntem Siebdruck mit nachfolgendem Aushärtprozeß aufgebracht werden.

Eine weitere Möglichkeit besteht darin, die Beschichtung aus der flüssigen Phase abzuscheiden und durch Hydrolyse umzuformen und bei einem nachfolgenden Tempern auszuhärten. Bei der Einstellung des Brechungsindex der Deckschicht 3, 5 mittels Dotierung werden feine Reaktionspartner, Metalle und/oder Metalloxyde verwendet. Diese besitzen kleine Abmessungen gegenüber dem Wellenlängenbereich des sichtbaren Lichts und besitzen vorzugsweise nur einige nm-Durchmesser. Die Schichtdicke der Deckschicht 3, 5 entspricht mindestens einer Lichtwellenlänge, vorzugsweise jedoch 1 bis 10 µm.

Es versteht sich von selbst, daß im Rahmen des erfindungsgemäßen Gedankens Änderungen möglich sind. So kann die transparente Deckschicht 3, 5 für die Symbole 9 jeweils Aussparungen aufweisen.

Wird die Totalreflexion nur auf der oberen Lichtleitplattenoberfläche 2 gewünscht, braucht die Deckschicht 3 nur auf diese aufgebracht werden, so daß die Deckschicht 5 entfällt.

## Patentansprüche

1. Lichtleitplatte mit aufgebrachten symbolartigen Schriftzeichen und einer Beleuchtungseinrichtung zur Einkopplung eines Lichtstrahls, dadurch gekennzeichnet, daß die Lichtleitplatte (1) an ihrer Lichtleitplattenoberfläche (2, 4) eine transparente Deckschicht (3, 5) mit einem optisch dünneren Medium als die Lichtleitplatte (1) aufweist, wodurch an einer sich zwischen der Lichtleitplattenoberfläche (2, 4) und Deckschicht (3, 5) bildenden Grenzfläche (6) eine Totalreflexion eintritt.

2. Lichtleitplatte nach Anspruch 1, dadurch gekennzeichnet, daß das Lichtleitplattenmaterial (11) ein Glas ist.

3. Lichtleitplatte nach Anspruch 1, dadurch gekennzeichnet, daß das Lichtleitplattenmaterial (11) ein Kunststoff ist.

4. Lichtleitplatte nach Anspruch 1, dadurch gekennzeichnet, daß die Deckschicht (3, 5) einen Brechungsindex größer 1,0 von Luft und kleiner 1,9 des Lichtleitplattenmaterials besitzt.

5. Lichtleitplatte nach einem oder mehreren der vorgenannten Ansprüche 1 bis 4, dadurch gekennzeichnet, daß die Deckschicht (3, 5) eine Schichtdicke von mindestens einer Lichtwellenlänge aufweist, vorzugsweise von 1 - 10 µm.

6. Lichtleitplatte nach einem oder mehreren der vorgenannten Ansprüche 1 bis 5, dadurch gekennzeichnet, daß die Deckschicht (3, 5) fein verteilte Metalle und/oder Metalloxyde aufweist, durch die der Brechungsindex eingestellt wird.

7. Lichtleitplatte nach Anspruch 6, dadurch gekennzeichnet, daß die feinverteilten Metall und Metalloxyde kleine Abmessungen gegenüber dem Wellenlängenbereich des sichtbaren Lichts haben und vorzugsweise nur einige nm-Durchmesser besitzen.
